Europäisches Patentamt

European Patent Office

Office européen des brevets

(11) Numéro de publication : **0 341 144 B1**

(12) **FASCICULE DE BREVET EUROPEEN**

(19)

(45) Date de publication du fascicule du brevet :
26.02.92 Bulletin 92/09

(21) Numéro de dépôt : **89401230.1**

(22) Date de dépôt : **28.04.89**

(51) Int. Cl.$^5$ : **F16L 11/12**, F16L 55/07,
G01M 3/28

(54) **Conduite tubulaire flexible en particulier pour le transport d'hydrocarbures.**

(30) Priorité : **02.05.88 FR 8805865**

(43) Date de publication de la demande :
**08.11.89 Bulletin 89/45**

(45) Mention de la délivrance du brevet :
**26.02.92 Bulletin 92/09**

(84) Etats contractants désignés :
**DE ES GB IT NL**

(56) Documents cités :
**EP-A- 0 052 957
WO-A-85/02001
FR-A- 2 422 100
FR-A- 2 583 133**

(73) Titulaire : **COFLEXIP
23 Avenue de Neuilly
F-75116 Paris (FR)**

(72) Inventeur : **Lenouveau, Joel
287, avenue Victor Hugo Yainville
F-76480 Le Trait (FR)**
Inventeur : **Rigaud, Jean
12, rue Closerie
F-78420 Chambourcy (FR)**

(74) Mandataire : **Leszczynski, André et al
CABINET NONY & CIE. 29 rue Cambacérès
F-75008 Paris (FR)**

EP 0 341 144 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention est relative à une conduite tubulaire flexible utilisable en particulier, mais non exclusivement, pour le transport d'hydrocarbures dans le cadre de l'exploitation de puits sous-marins.

On connait déjà différents types de conduites tubulaires flexibles. Un premier type de conduite dénommé "smooth-bore" comprend un tube interne en matériau souple en matériau plastique tel qu'un polyamide, du polyéthylène ou du groupe des PVDF ou en matériau élastomérique destiné à assurer l'étanchéité vis-à-vis du produit transporté, un ensemble d'armatures de renforcement, enroulées en hélices ou tressées qui assurent la résistance aux sollicitations mécaniques, notamment de pression, traction et torsion, le nombre, la nature et l'agencement des armatures étant définis en fonction des dimensions et de l'usage prévus pour la conduite, et enfin un revêtement extérieur de protection généralement en matériau souple des mêmes groupes que le matériau du tube interne. Des conduites de ce type présentent des caractéristiques mécaniques particulièrement favorables sont fabriquées et commercialisées en grandes longueurs par la société déposante.

Celle-ci fabrique et commercialise également des conduites du type "rough-bore" qui, outre les composants mentionnés ci-dessus comportent une carcasse métallique interne destinée à empêcher l'écrasement du flexible et à protéger le tube interne vis-à-vis des agressions des produits transportés et du risque d'implosion en cas de décompression rapide lors du transport de produits contenant du gaz.

Dans le cas où les conduites sont amenées à transporter du gaz, seul ou associé à des liquides, notamment des hydrocarbures liquides ou des mélanges diphasiques, il a été proposé pour assurer l'évacuation du gaz qui diffuse nécessairement au travers du tube interne, de rendre le revêtement extérieur relativement perméable, soit par des trous, soit en choisissant un matériau à perméabilité au gaz plus élevée que celle du matériau du tube interne. Il est également connu de réaliser des zones d'affaiblissement dans le revêtement extérieur, notamment des rainures ou des trous non débouchants pour former des emplacements d'éclatement en cas de surpression, offrant ainsi un passage préférentiel pour l'échappement du gaz (bursting discs).

La société déposante a proposé dans son brevet français 83 16883 (FR-A-2 553 859) de munir la conduite tubulaire flexible d'une structure extérieure de renforcement permettant d'éviter tout risque d'éclatement de la conduite flexible. Selon le document antérieur, il est prévu autour du revêtement de protection, un second ensemble d'armatures aptes à résister à la pression interne et une gaine externe de protection. Il est également prévu dans le document antérieur de réaliser un débit de fuite à l'aide d'un évidement réalisé dans un embout dont est munie la conduite et qui communique avec l'espace annulaire extérieur à l'ensemble d'armatures intérieur.

Cette solution complique notablement la réalisation de la conduite et en augmente considérablement le coût. En outre, cette solution est limitée à des conduites se trouvant en totalité ou en partie à l'air libre, telles que des conduites de transport à terre ou en surface ou des conduites de remontée (risers) comportant une partie à l'air libre dans laquelle est réalisé l'évidement permettant le débit de fuite.

La présente invention se propose de réaliser une conduite tubulaire flexible, notamment de grande longueur offrant une sécurité vis-à-vis des déformations de la gaine extérieure sous l'effet des gaz diffusants au travers du tube interne et des risques d'éclatement, sans nécessiter de structure extérieure de renforcement, les conduites selon l'invention pouvant en outre être totalement immergées et servir par exemple de conduites de transport sous l'eau (flow lines ou lignes d'injection de gaz, par exemple).

Les conduites tubulaires flexibles selon l'invention sont du type comportant un tube interne en matériau souple assurant l'étanchéité, un revêtement extérieur de protection en matériau souple, au moins une zone annulaire comportant des armatures de renforcement entre le tube interne et le revêtement de protection externe et, habituellement une carcasse métallique interne, et comportant au moins un moyen de passage mettant en communication ladite zone annulaire avec l'environnement extérieur, ledit moyen étant pourvu d'une soupape à ouverture et fermeture rapides agencée pour s'ouvrir et se refermer à des pressions différentielles déterminées dans ladite zone annulaire. On entend par pression différentielle la différence entre la pression absolue régnant dans la zone annulaire et la pression de l'environnement extérieur (pression hydrostatique).

Selon l'invention, la zone annulaire comporte une ou plusieurs nappes d'armatures de renforcement telles que des fils métalliques, en matériaux composites fibres/résine ou en matière plastique, enroulées hélicoïdalement ou tressées, la zone annulaire étant le cas échéant partiellement remplie de graisse ou d'un autre fluide apte en particulier à assurer la lubrification des fils constituant la ou les nappes d'armatures. Par contre l'invention n'est pas applicable au cas d'un matériau plastique ou élastomérique remplissant la totalité de la zone annulaire et dans lequel les fils d'armatures seraient noyés.

En effet, la présente invention repose sur la constatation faite après de nombreuses études que, lorsqu'un flexible est utilisé pour le transport de gaz ou d'un fluide contenant du gaz, sous pression, le gaz qui passe par perméation progressive et très lente à travers le tube interne, peut, même lorsque la pression différentielle est très faible, de l'ordre de quelques bars, ou même d'une fraction de bar, circuler dans la longueur de la zone annulaire lorsque celle-ci ne contient pas autour des armatures de matériau relativement imperméable au gaz. De préférence selon l'invention la communication avec l'environnement s'effectue à partir de la zone annulaire se trouvant immédiatement en dessous du revêtement extérieur même pour des conduites qui comportent plusieurs zones annulaires comportant chacune des fils d'armatures entre des gaines de protection.

La mise en communication selon l'invention de la zone annulaire avec l'environnement extérieur peut s'effectuer sur une section de conduite en réalisant simplement un orifice dans la gaine extérieure sur lequel la soupape est mise en place de manière étanche, notamment avec interposition d'un joint d'étanchéité ou en variante par d'autres moyens tels que collage, serrage mécanique ou soudure. De préférence, cette mise en communication s'effectue au niveau d'un collier monté autour du revêtement extérieur et comportant un orifice aligné avec l'orifice du revêtement extérieur et dans lequel est mise en place de manière étanche la soupape, ou en variante, au niveau d'un embout dont est munie la conduite, et à l'intérieur duquel débouche la zone annulaire à l'extrémité du revêtement extérieur, l'embout comportant un orifice dans sa paroi extérieure dans lequel est mise en place la soupape. Dans le cas où l'orifice dans l'embout n'est pas à l'aplomb de la zone d'extrémité du revêtement, il peut être prévu selon l'invention une tubulure mettant en communication l'orifice extérieur de l'embout et la zone annulaire en partie courante, notamment au voisinage de l'extrémité du revêtement.

La soupape est agencée pour s'ouvrir à une pression différentielle déterminée dans la zone annulaire, inférieure, par exemple de moitié, à la valeur de la pression différentielle dans la zone annulaire qui entraînerait le décollement de la gaine de protection extérieure. Avec les épaisseurs de gaine et les matériaux utilisés à l'heure actuelle, la pression d'ouverture est généralement comprise entre environ 1 et environ 5 bars. La soupape est par ailleurs agencée pour se refermer de façon étanche pour une pression différentielle déterminée dans la zone annulaire. Dans la pratique, afin d'éviter toute pénétration d'eau dans la conduite susceptible d'endommager les fils des nappes d'armatures on choisit une soupape apte à se refermer à une pression différentielle proche de sa pression différentielle d'ouverture, la différence entres les pressions d'ouverture et de fermeture pouvant, en particulier, être de l'ordre de 5 à 30% de la pression différentielle d'ouverture.

Selon l'invention, on peut utiliser différents types de soupapes, notamment des clapets ou des soupapes de décharge, munis d'un ressort de tarage déterminant la pression d'ouverture. Dans les cas où la soupape doit être montée sur une section de conduite en partie ou totalement immergée, par exemple dans le cas d'une conduite de remontée d'hydrocarbures produits à partir de puits sous-marins ou une conduite de transport d'hydrocarbures sur le fond, elle subit la pression hydrostatique et on doit veiller à choisir une soupape apte à résister à la pression hydrostatique qui peut être de 100 bars ou plus, notamment lorsque la pression dans la zone annulaire n'a pas encore augmentée par perméation du gaz et en outre fonctionner en étant soumise à sa sortie à cette pression hydrostatique.

D'autres avantages et caractéristiques de l'invention apparaîtront à la lecture de la description suivante de modes de réalisation donnés à titre d'exemples, illustrés sur le dessin annexé dans lequel :

– la figure 1 est une vue schématique en partie en coupe d'un premier mode de réalisation de l'invention,

– la figure 2 est une vue fragmentaire schématique d'un second mode de réalisation, et

– la figure 3 est une vue en coupe selon III-III de la figure 2.

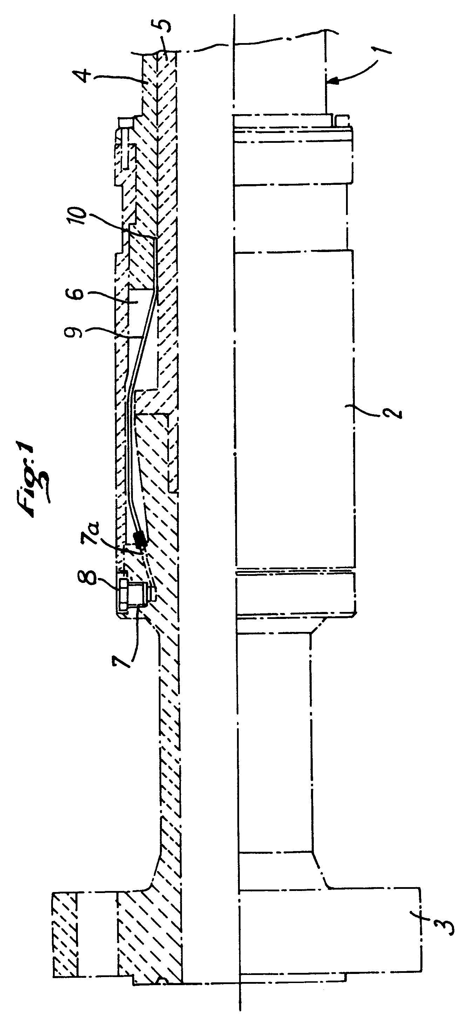

Dans la figure 1 on voit une conduite selon l'invention désignée globalement par 1, montée dans un embout 2 prolongé par une bride d'extrémité 3.

La conduite tubulaire 1 présente une structure non détaillée sur le dessin, comportant une gaine extérieure de protection 4 et une structure interne 5 comportant une gaine interne et une carcasse métallique interne, par exemple en feuillard agrafé et entre la gaine interne et la gaine de revêtement extérieure 4, une zone annulaire dans laquelle sont logées des armatures de renforcement notamment sous la forme de nappes de fils enroulés en hélices et de la graisse remplissant partiellement l'espace annulaire pour assurer une protection des fils. La conduite peut également comprendre d'autres nappes d'armatures et des gaines intermédiaires.

Il est prévu un volume annulaire 6 à l'extrémité de la gaine de revêtement extérieure 4, à l'intérieur de l'embout 2, et dans lequel débouchent les extrémités (non représentées) des fils d'armatures, ledit volume 6 communiquant selon l'invention par un orifice 7a avec un logement 7 débouchant dans la paroi extérieure de l'embout 2 et dans lequel est montée une soupape 8. Dans l'exemple de réalisation illustré à la figure 1, il est prévu une tubulure 9 reliant la soupape 8 à l'extrémité 10 de la partie courante de la zone annulaire située entre la gaine de revêtement extérieure 4 et la couche la plus extérieure de la structure interne 5 de la conduite flexible.

Dans ce mode de réalisation, et pour des conduites comportant plusieurs zones annulaires contenant des nappes d'armatures de renforcement, il est envisageable en variante de relier, au niveau de l'embout par une tubulure, la soupape à l'une quelconque ou plusieurs des zones annulaires de la conduite.

En outre, dans le cas de sections de conduite raccordées par des embouts, il est possible de mettre en communication par un conduit approprié les deux embouts de telle sorte que la soupape prévue dans l'un des embouts permet d'assurer une détente des zones annulaires communiquant ainsi au niveau des embouts, des sections successives de conduites.

Une soupape utilisable selon l'invention peut être par exemple une soupape du type comportant un clapet mobile par rapport à un siège de soupape sous l'effet d'une membrane et un ressort de tarage agissant sur le clapet.

En position montée de la soupape la membrane est soumise sur une de ses faces à la pression hydrostatique et sur l'autre à la pression régnant dans la zone annulaire, l'effet de cette pression étant équilibré par le ressort jusqu'à la valeur de seuil prédéterminée par les caractéristiques du ressort, le dépassement de cette valeur par la pression différentielle dans la zone annulaire provoquant le déplacement du clapet par rapport à son siège et donc l'ouverture de la soupape.

Une telle soupape peut être utilisée notamment à une pression hydrostatique de 100 bars et s'ouvrir à une pression différentielle de 4 bars correspondant à une valeur de pression dans la zone annulaire de la conduite de 104 bars et se refermer à une valeur de pression de 103 bars tout en assurant une parfaite étanchéité en position de fermeture.

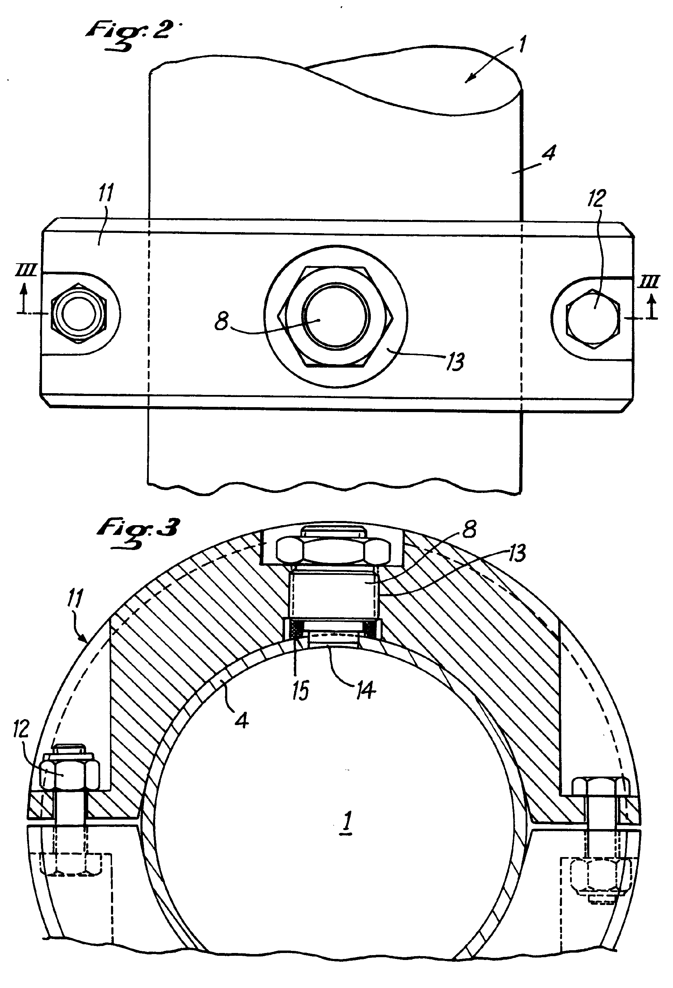

Dans le mode de réalisation des figures 2 à 3, l'invention est mise en oeuvre au niveau d'un collier désigné globalement par 11 mis en place autour de la conduite 1. Comme on le voit le mieux sur la figure 3, le collier dans le mode de réalisation illustré, est constitué de deux demi-colliers assemblés par des boulons 12. La soupape 8 est mise en place dans un évidement 13 du collier et communique à son côté amont avec un orifice 14 ménagé dans le revêtement extérieur 4 du tube. La soupape 8 est, dans l'exemple illustré, mise en place moyennant l'interposition d'un joint d'étanchéité 15 par son culot d'extrémité dans l'orifice 14 du revêtement extérieur de protection 4 de la conduite. Le côté amont de la soupape est ainsi en communication avec la zone annulaire de la conduite dans laquelle le drainage du gaz doit être réalisé. Lorsque la soupape 8 s'ouvre à la pression d'ouverture prédéterminée, la zone annulaire de la conduite est mise en communication avec l'extérieur par l'orifice 14, l'intérieur de la soupape 8 et l'orifice d'extrémité de celle-ci dans l'évidement 13 débouchant à la périphérie du collier 11.

La soupape utilisée dans ce mode de réalisation peut être du même type que celle du mode de réalisation de la figure 1.

Dans un mode de réalisation, non représenté, la soupape peut être mise en place directement sur un orifice réalisé dans le revêtement extérieur du tube, celui-ci devant alors présenter une épaisseur suffisante pour loger la soupape. Dans ce cas également, un joint d'étanchéité est prévu entre la soupape et l'orifice réalisé dans le revêtement.

Selon l'invention on peut mettre une seule soupape sur une grande longueur de conduite ou en variante plusieurs soupapes en des emplacements espacés.

Dans le cas d'une conduite disposée avec une certaine dénivellation il convient d'installer au moins une soupape au voisinage du point le plus haut de la conduite.

Bien que dans les exemples illustrés on ait montré une seule soupape sur un collier ou un embout, il est clair que l'on peut disposer sur un même collier ou sur un même embout, plusieurs soupapes espacées circonférentiellement, agencées pour être en communication chacune par son côté amont avec la ou les zones annulaires dans lesquelles le drainage du gaz doit être réalisé.

L'invention présente par rapport aux solutions actuellement existantes du problème des surpressions de gaz dans des conduites tubulaires flexibles, l'avantage que la ou les soupapes peuvent fonctionner selon des cycles successifs d'ouverture et de fermeture sans nécessiter aucune intervention sur la conduite ni risquer d'engendrer des déformations ou des éclatements de la gaine de revêtement extérieure. De plus, des essais effectués par la société déposante ont montré qu'il n'y a pratiquement pas de pénétration d'eau au cours de phases d'ouverture de la soupape même avec des pressions hydrostatiques élevées, de telle sorte que les nappes d'armatures sont efficacement protégées contre la corrosion.

## Revendications

1. Conduite tubulaire flexible comportant un tube interne en matériau souple assurant l'étanchéité, un revêtement extérieur de protection en matériau souple, au moins une zone annulaire comportant des armatures de renforcement entre le tube interne et le revêtement de protection externe, et, habituellement une carcasse métallique interne, et comportant un moyen de passage (6,7,7a;9;13,14) mettant en communication ladite zone annulaire avec l'environnement extérieur, caractérisée par le fait que ledit moyen est pourvu d'une soupape (8) à ouverture et fermeture rapides agencée pour s'ouvrir et se refermer à des pressions différentielles déterminées dans ladite zone annulaire.

2. Conduite selon la revendication 1, caractérisée par le fait que ledit moyen comprend un orifice (14) dans la gaine extérieure (4) de la conduite dans lequel la soupape (8) est montée de manière étanche, en particulier avec interposition d'un joint d'étanchéité (15).

3. Conduite selon l'une quelconque des revendications 1 et 2, caractérisée par le fait qu'elle comporte au moins un collier (11) monté autour du revêtement extérieur (4) de la conduite, et comportant un orifice (13) aligné avec un orifice (14) du revêtement extérieur et dans lequel la soupape 8 est mise en place de manière étanche, en particulier avec interposition d'un joint d'étanchéité.

4. Conduite selon la revendication 1, caractérisée par le fait qu'elle comporte au moins un embout (2) comportant un volume annulaire (6) dans lequel débouche la zone annulaire à l'extrémité du revêtement extérieur (4) de la conduite, l'embout comportant un logement (7) dans sa paroi extérieure communiquant avec le volume annulaire (6) et dans lequel est mise en place la soupape (8).

5. Conduite selon la revendication 4, caractérisée par le fait qu'elle comprend une tubulure (9) mettant en communication le logement extérieur (7) de l'embout (2) et la zone annulaire, en particulier au niveau de l'extrémité (10) de la partie courant de celle-ci.

6. Conduite selon l'une quelconque des revendications précédentes, caractérisée par le fait que la soupape (8) est agencée pour s'ouvrir à une pression différentielle dans la zone annulaire comprise entre environ 1 et environ 5 bars.

7. Conduite selon l'une quelconque des revendications précédentes, caractérisée par le fait que la soupape (8) est agencée pour se refermer pour une pression différentielle dans la zone annulaire proche de la pression différentielle d'ouverture de ladite soupape.

8. Conduite selon l'une quelconque des revendications précédentes, caractérisée par le fait que la différence entre les pressions d'ouverture et de fermeture de la soupape (8) est de l'ordre de 5 à 30% de la pression différentielle d'ouverture de ladite soupape.

**Patentansprüche**

1. Flexible Rohrleitung mit einem Innenrohr aus elastischem Material, das die Dichtigkeit sicherstellt, einer äusseren Schutzumkleidung aus elastischem Material, mindestens einer ringförmigen Zone, die Verstärkungsarmierungen zwischen dem Innenrohr und der äusseren Schutzumkleidung aufweist, und für gewöhnlich einem Innenmantel aus Metall, wobei sie eine Durchlasseinrichtung (6,7,7a;9;13,14) aufweist, die die genannte ringförmige Zone mit der Aussenumgebung in Verbindung setzt, dadurch **gekennzeichnet**, dass die genannte Einrichtung von einem schnell öffnenden und schliessenden Ventil (8) gebildet ist, das dazu eingerichtet ist, sich bei differentiellen Drücken, die in der genannten ringförmigen Zone bestimmt sind, zu öffnen und wieder zu schliessen.

2. Leitung nach Anspruch 1, dadurch gekennzeichnet, dass die genannte Einrichtung eine Öffnung (14) in der äusseren Hülle (4) der Leitung aufweist, in welcher das ventil (8) insbesondere unter Zwischenordnung einer Dichtung (15) dichtend angebracht ist.

3. Leitung nach irgendeinem der Ansprüche 1 und 2,, dadurch gekennzeichnet, dass sie mindestens einen Ring (11) aufweist, der rund um die äussere Umkleidung (4) der Leitung angebracht ist, und mit einer Offnung (13), die auf eine Öffnung (14) der äusseren Umkleidung ausgerichtet ist und in welche das Ventil (8) insbesondere unter Zwischenordnung einer Dichtung dichtend eingesetzt ist.

4. Leitung nach Anspruch 1, dadurch gekennzeichnet, daß sie mindestens ein Ansatzstück (2) aufweist, das einen ringförmigen Raum (6) aufweist, in welchen die ringförmige Zone an Ende der äußeren Umkleidung (4) der Leitung einmündet, wobei das Ansatzstück in seiner Außenwand eine Aufnahme (7) aufweist, die mit dem ringförmigen Raum (6) in Verbindung steht und in welche das Ventil (8) eingesetzt ist.

5. Leitung nach Anspruch 4, dadurch gekennzeichnet, daß sie einen Rohrstutzen (9) aufweist, der die äußere Aufnahme (7) des Ansatzstückes (2) und die ringförmige Zone in Verbindung setzt, und zwar insbesondere auf der Höhe des Endes (10) jenes Teils, das in diese übergeht.

6. Leitung nach irgendeinem der vorangehenden Ansprüche, dadurch gekennzeichnet, daß das Ventil (8) dazu eingerichtet ist, sich bei einem differentiellen Druck in der ringförmigen Zone zu öffnen, der zwischen etwa 1 bar und etwa 5 bar liegt.

7. Leitung nach irgendeinem der vorangehenden Ansprüche, dadurch gekennzeichnet, daß das Ventil (8) dazu eingerichtet ist, gegenüber einem differentiellen Druck in der ringförmigen Zone zu schließen, der nahe dem differentiellen Öffnungdruck des genannten Ventils liegt.

8. Leitung nach irgendeinem der vorangehenden Ansprüche, dadurch gekennzeichnet, daß der Unterschied zwischen dem Öffnungsdruck und dem Schließdruck des Ventils (8) in der Größenordnung von 5 bis 30% des differentiellen Öffnungsdrucks des genannten Ventils liegt.

**Claims**

1. A flexible pipe comprising an internal tube made of supple material ensuring imperviousness, an outer protective covering made of supple material, at least one annular zone comprising reinforcing armatures between the internal tube and the external protective covering and conventionally an internal metal frame, wherein it comprises a means of passage (6,7,7a;9,13,14) interconnecting the said annular zone with the outer atmosphere, characterised in that the said means is provided with a fast opening and closing valve (8) arranged so as to open and close at predetermined differential pressures in the said annular zone.

2. A pipe as claimed in claim 1, characterised in that the said means comprise an orifice (14) in the outer sheath (4) of the pipe in which the valve (8) is mounted so as to be sealed, in particular with an interposed sealing joint (15).

3. A pipe as claimed in any one of claims 1 and 2, characterised in that it comprises at least one collar (11) mounted around the outer covering (4) of the pipe and comprising an orifice (13) aligned with an orifice (14) in the outer covering and in which the valve (8) is positioned so as to be sealed, in particular with an interposed sealing joint.

4. A pipe as claimed in claim 1, characterised in that it comprises at least one connecting piece (2) comprising an annular space (6) into which leads the annular zone at the end of the outer covering (4) of the pipe, the connecting piece comprising a seating (7) in its outer wall which communicates with the annular space (6) and in which the valve (8) is positioned.

5. A pipe as claimed in claim 4, characterised in that it comprises a tube (9) which interconnects the outer seating (7) of the connecting piece (2) and the annular zone, in particular at the level of the end (10) of the running portion thereof.

6. A pipe as claimed in any one of the preceding claims, characterised in that the valve (8) is arranged so as to open at a differential pressure in the annular zone ranging between about 1 and about 5 bar.

7. A pipe as claimed in any one of the preceding claims, characterised in that the valve (8) is arranged so as to close at a differential pressure in the annular zone close to the differential opening pressure of the said valve.

8. A pipe as claimed in any one of the preceding claims, characterised in that the difference between the opening and closing pressures of the valve (8) is in the order to 5 to 30% of the differential opening pressure of the said valve.

Fig.1

Fig. 2

Fig. 3